# EUROPÄISCHE PATENTSCHRIFT

(11) **EP 0 974 011 B1**
(45) Veröffentlichungstag und Bekanntmachung des Hinweises auf die Patenterteilung: **13.03.2002**
(21) Anmeldenummer: 98916938.8
(22) Anmeldetag: 13.03.1998
(51) Int. Cl.: F16B 37/04

(54) **ABGASANLAGENANORDNUNG EINES KRAFTFAHRZEUGS**
DEVICE FOR THE EXHAUST GAS SYSTEM OF A MOTOR VEHICLE
DISPOSITIF POUR SYSTEME D'ECHAPPEMENT D'UN VEHICULE A MOTEUR

(30) Priorität: 09.04.1997 DE 19714700
(43) Veröffentlichungstag der Anmeldung: 26.01.2000
(73) Patentinhaber: Volkswagen Aktiengesellschaft, 38436 Wolfsburg (DE)
(72) Erfinder: HOHEISEL, Gerhard, D-38448 Wolfsburg (DE); NIEMAX, Lutz, D-38444 Wolfsburg (DE); KEMPERNOLTE, Thomas, D-38364 Schöningen (DE)
(86) Internationale Anmeldenummer: EP9801461
(87) Internationale Veröffentlichungsnummer: WO9845606

(56) Entgegenhaltungen:
- EP-A- 0 346 237
- DE-A- 4 228 863
- US-A- 4 074 491
- US-A- 4 728 235
- US-A- 5 339 500

## Beschreibung

Die Erfindung bezieht sich auf eine Verbindungseinrichtung für ein Abgasanlagenelement gemäß dem Oberbegriff von Anspruch 1.

Da die Abgasanlage eines Kraftfahrzeuges und insbesondere der Konverter (Katalysator) der Abgasanlage bei Betrieb sehr heiß werden kann, ist in der Regel unterhalb der Abgasanlage bzw. des Konverters ein Wärmeabschirmblech angebracht, das eine übermäßige Hitzeeinwirkung auf die Fahrbahn mit den daraus folgenden Gefahren zumindest weitgehend verhindern soll. Aufgrund des großen Temperaturbereichs, den die Abgasanlage und speziell der Konverter annehmen kann, muß ein entsprechender Längenausgleich in Fahrzeug-Längsrichtung zwischen diesen beiden Bauteilen, der Abgasanlage bzw. dem Konverter und dem Wärmeabschirmblech ermöglicht werden.

Zu diesem Zweck sind bisher unter anderem Schiebesitze verwendet worden, bei denen eines der Bauteile, d. h. das Wärmeabschirmblech oder das Abgasanlagenelement, mit einem Kulissenstein starr verbunden ist, der als Teil des Schiebesitzes innerhalb einer Gleitschiene mit Spiel in Fahrzeug-Längsrichtung verschiebbar ist. Das andere zu verbindende Bauteil wird dabei mit dem die Führung für den Kulissenstein bildenden Schiebesitzgehäuse verbunden, so daß durch die Verschiebbarkeit des Kulissensteins innerhalb des Schiebesitzgehäuses die relativere Verschiebbarkeit der beiden Bauteile zueinander gewährleistet wird. Nachteilhaft an einer derartigen Anordnung der beiden Bauteile mit einem derartigen Schiebesitz ist jedoch, daß der aus dem Schiebesitzgehäuse, dem eingelegten Kulissenstein sowie einer Festziehschraube gebildete Schiebesitz relativ aufwendig und teuer herzustellen ist. Weiterhin ist die ordnungsgemäße Führung des Kulissensteins in der Führung innerhalb des hohen Temperaturbereichs, dem der Schiebesitz unterworfen ist, problematisch.

Die DE 42 28 511 A1 bzw. die US-PS-5,339,500, von der die Erfindung ausgeht, beschreibt eine Verbindungseinrichtung zum Verbinden von Platten mit unterschiedlichem Ausdehnungsverhalten, bei dem zwei Klemmschenkel über einen Zwischenbereich verbunden sind, und Durchgangslöcher in den Klemmschenkeln vorgesehen sind, durch die eine Schraube hindurchgeführt werden kann, so daß die beiden Klemmschenkel entgegen der elastischen Federkraft des Zwischenbereichs auf Anschläge aufeinander gedrückt werden. An den Klemmschenkeln sind jeweils vordere und hintere Federzungen vorgesehen, deren axialer Abstand im entspannten Zustand geringer ist als die Dicke der einzuklemmenden Platte. Die Verbindungseinrichtung dient dabei zum Verbinden von Platten mit unterschiedlichem Ausdehnungsverhalten, insbesondere im Automobilbau bei der Befestigung von Kunststoffgehäusen oder - blenden an Karosserieteilen. Bei eingefügter Schraube nehmen die Federzungen die Platte mit einer gewissen Spannkraft auf und ermöglichen bei einem Ausdünnen der Platte aufgrund einer Hitzeeinwirkung ein Nachfedern in axialer Richtung, so daß weiterhin eine sichere Aufnahme der ausgedünnten Platte ermöglicht wird. Die Klemmkraft der Federlappen wird dabei so ausgelegt, daß eine seitliche Verschiebung der aufzunehmenden Platte in Folge einer Ausdehnung möglich ist.

Dennoch ist die Verbindungseinrichtung gemäß der US-PS-5,339,500 nicht optimal ausgebildet. Das hier verwirklichte Gewindeteil ist als integraler Bestandteil der Verbindungseinrichtung, nämlich als Teil eines U-förmig umgebogenen Schenkels ausgebildet. Hierdurch bedingt benötigt der "untere Teil" der Verbindungseinrichtung zunächst einerseits einen erhöhten Raumbedarf. Andererseits ist die Verbindungseinrichtung auch nicht flexibel vom Monteur handhabbar.

Der Erfindung liegt daher die Aufgabe zugrunde, eine Verbindungseinrichtung zu schaffen, die eine sichere und zuverlässige Verbindung zwischen dem Abgasanlagenelement und dem Wärmeabschirmblech ermöglicht, einfach und kostengünstig herzustellen ist und eine flexible Handhabung durch den Monteur gewährleistet.

Diese Aufgabe wird durch eine Verbindungseinrichtung nach Anspruch 1 gelöst. Die Unteransprüche beschreiben bevorzugte Weiterbildungen.

Erfindungsgemäß kann somit das Gewindeteil nunmehr von der Verbindungseinrichtung gelöst werden bzw., nämlich dann, wenn dies erforderlich ist, das Gewindeteil über die entsprechende Rastverbindung mit der Verbindungseinrichtung verbunden werden. Im Unterschied zu der Verbindungseinrichtung gemäß der US-PS-5,339,500 ist einerseits der von dieser erfindungsgemäßen Verbindungseinrichtung benötigte Raumbedarf geringer, da der "untere Bereich" der Verbindungseinrichtung "nur" noch die Breite des Gewindeteiles selbst benötigt und nicht mehr den zusätzlichen Raum für den entsprechend umgebogenen Schenkel. Ein weiterer wesentlicher Vorteil liegt in der flexiblen Handhabung der erfindungsgemäßen Verbindungseinrichtung, da nicht nur - nämlich bei von der Verbindungseinrichtung gelöstem Gewindeteil - eine einfache Lagerhaltung der Verbindungseinrichtung und der Gewindeteile möglich ist, sondern der Monteur auch an nur schwer zugänglichen Stellen dann separat das Gewindeteil an der Verbindungseinrichtung befestigen kann, insbesondere ohne daß er eine Mutter von der anderen Seite entgegenhalten muß, da das Gewindeteil ja "selbständig" an der Verbindungseinrichtung befestigt ist. Insbesondere kann der Monteur entscheiden, ob er das Gewindeteil schon vorher oder erst an der Stelle, die für die Montage bestimmt ist, mit der Verbindungseinrichtung verbindet. Die Handhabung der erfindungsgemäßen Verbindungseinrichtung ist für den Monteur wesentlich einfacher und flexibler.

Die Erfindung wird im folgenden anhand der beiliegenden Zeichnungen an einigen Ausführungsformen näher erläutert. Es zeigen:
- Figur 1: eine Seitenansicht einer Verbindungseinrichtung mit einem Gewindeteil, das als Mutter ausgeführt ist und nicht mit dem Klemmschenkel über eine Rastverbindung verbindbar ist,

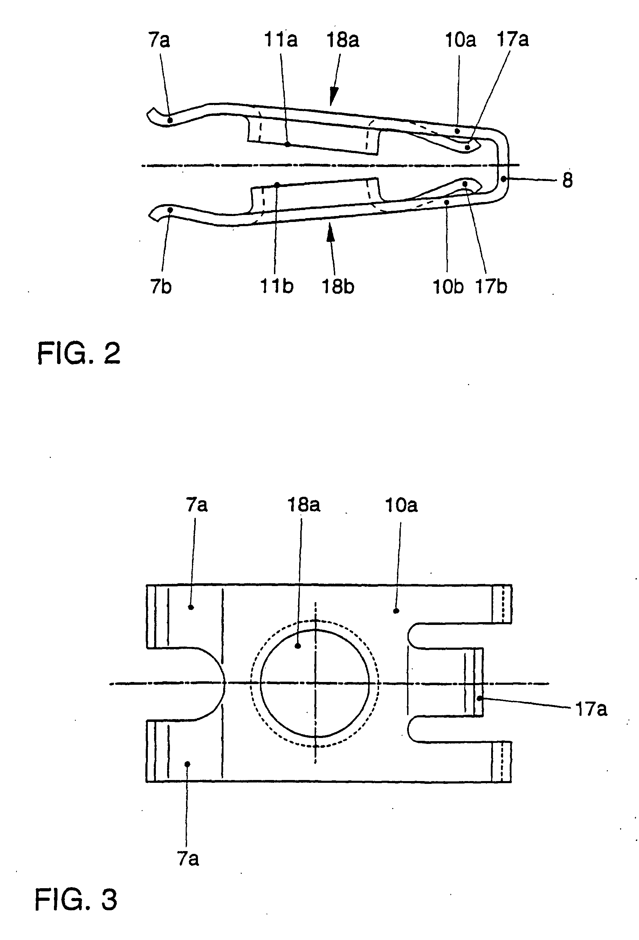

- Figur 2: die Verbindungseinrichtung aus Figur 1 in entspanntem Zustand,
- Figur 3: eine Draufsicht auf die Verbindungseinrichtung der Figur 2,
- Figur 4: eine Draufsicht auf einen Spannbügel mit einer derartigen Verbindungseinrichtung,
- Figur 5: eine Verbindungseinrichtung gemäß der Erfindung und

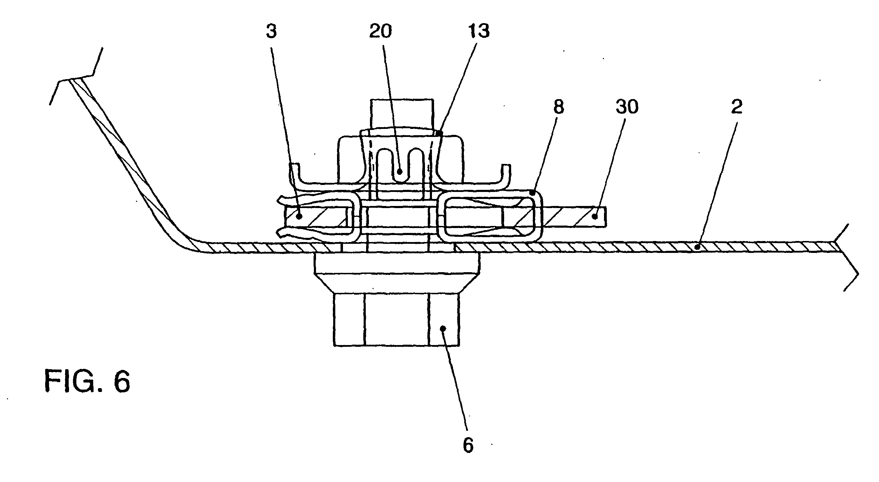

- Figur 6: eine Abgasanlagenanordnung mit der Verbindungseinrichtung gemäß der Erfindung.

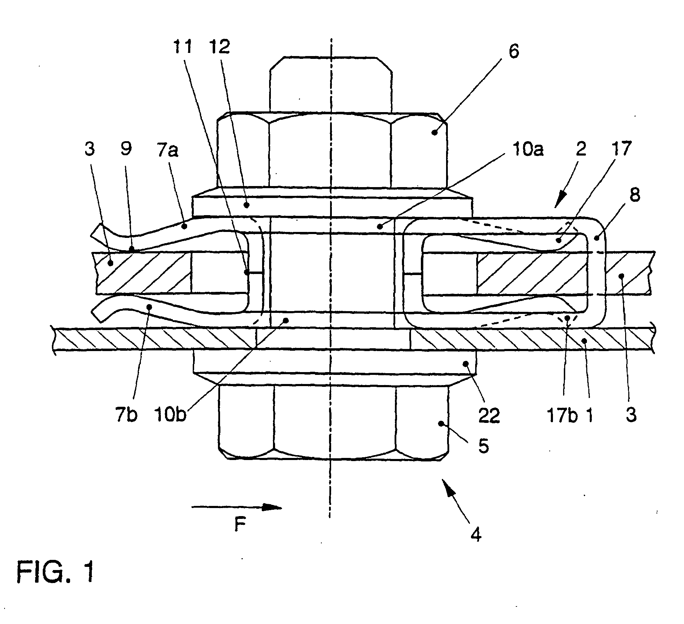

Eine Abgasanlagenanordnung weist gemäß Figur 1 ein Wärmeabschirmblech 1 und einen Spannbügel 3 des Konverters bzw. Katalysators einer Abgasanlage auf, die durch einen als Aufnahmeeinrichtung dienenden Schiebesitz 2 miteinander verbunden werden. Der Schiebesitz 2 weist zwei Klemmschenkel 10a und 10b auf, die über einen als elastisches Verbindungsglied wirkenden Zwischenbereich 8 miteinander verbunden sind. An den beiden Klemmschenkeln 10a und 10b sind an der in der Figur links gezeigten vorderen Seite und der in der Figur rechts gezeigten hinteren Seite jeweils obere Gleitzungen 7a und 17a sowie untere Gleitzungen 7b und 17b ausgebildet.

Die Klemmschenkel 10a und 10b weisen jeweils Durchgangsöffnungen für eine Schraube 5 auf, deren Schraubenteller 12 und eine auf der anderen Seite des Schiebesitzes mit der Schraube befestigte Mutter 6 die Klemmschenkel 10a und 10b in Anschlägen 11a und 11b aufeinanderdrücken. Die Schraube verläuft dabei durch die Durchgangsöffnungen der Klemmschenkel und ein Langloch 16 in dem Spannbügel 3.

Da der axiale Abstand zwischen den Gleitzungen 7a und 7b sowie den Gleitzungen 17a und 17b bei zusammengedrückten Klemmschenkeln 10a und 10b geringer ist als die axiale Höhe des Spannbügels 3, wird dieser mit einer entsprechenden Klemmkraft der Gleitzungen 7a, 7b, 17a, 17b im Bereich der jeweiligen Gleitflächen 9 der Gleitzungen erfaßt.

Der Schiebeweg des Schiebesitzes in die durch einen Pfeil F gezeigte Fahrzeug-Längsrichtung (Fahrtrichtung) ergibt sich aus der Differenz des Durchmessers des Langlochs 16 und des radialen Durchmessers des Schiebesitzes im Bereich der Anschläge 11a und 11b.

Der Schraubenteller 12 liegt dabei auf dem Klemmschenkel 10a, während ein Teller 22 der Mutter 6 auf dem Wärmeabschirmblech 1 liegt und dieses gegen den Klemmschenkel 10b drückt.

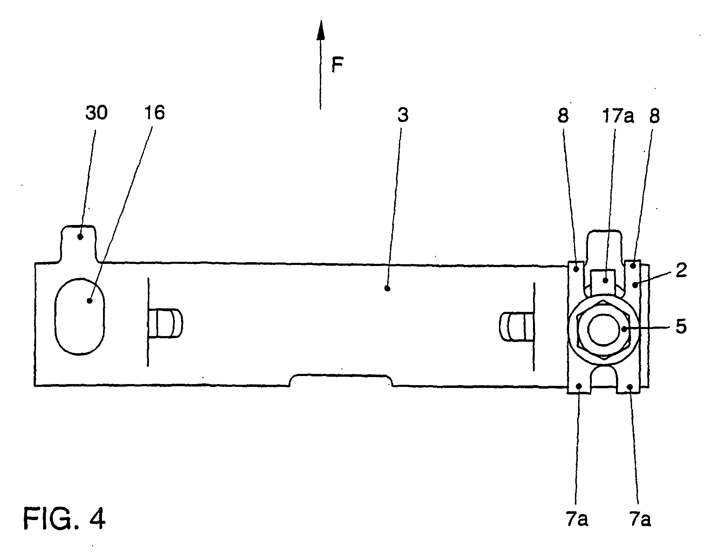

Figur 4 zeigt einen Spannbügel 3, der an zwei Seiten über Schiebesitze mit dem Wärmeabschirmblech verbunden werden kann, wobei der Anschaulichkeit halber lediglich in der rechten Seite ein Schiebesitz 2 eingesetzt ist. Um eine Verschiebbarkeit des Schiebesitzes in Fahrzeug-Längsrichtung auf dem Spannbügel über den ganzen Schiebeweg zu gewährleisten und dennoch eine Verdrehung des Schiebesitzes z.B. während des Eindrehens der Schraube oder aufgrund von Querkräften zu verhindern, ist an dem Spannbügel 3 eine Nase 30 ausgebildet. Sie bietet den Gleitzungen 17a und 17b einen hinreichenden Schiebeweg, blockiert jedoch eine allzu große Querbewegung der beiden links und rechts der Gleitzungen 17a und 17b angeordneten Zwischenbereiche 8, so daß diese nicht über die Nase 30 gedreht werden können, auch wenn der Schiebesitz ganz in Richtung der Nase (in die in Figur 4 oben gelegene Position) geschoben ist.

Durch diese Anordnung können temperaturbedingt unterschiedliche Ausdehnungswege der vorgenannten Abgasanlagen-Bauteile ausgeglichen werden.

Der Schiebesitz kann dabei der Aufnahme von Relativbewegungen zwischen den zwei Bauteilen, insbesondere Stahlbauteilen bei geringen, genau definierten, Längskräften dienen, die aufgrund der anliegenden Temperaturen am Wärmeabschirmblech (ca. 300°C) sowie dem Katalysator (ca. 850°C) bis zu 3 mm betragen können.

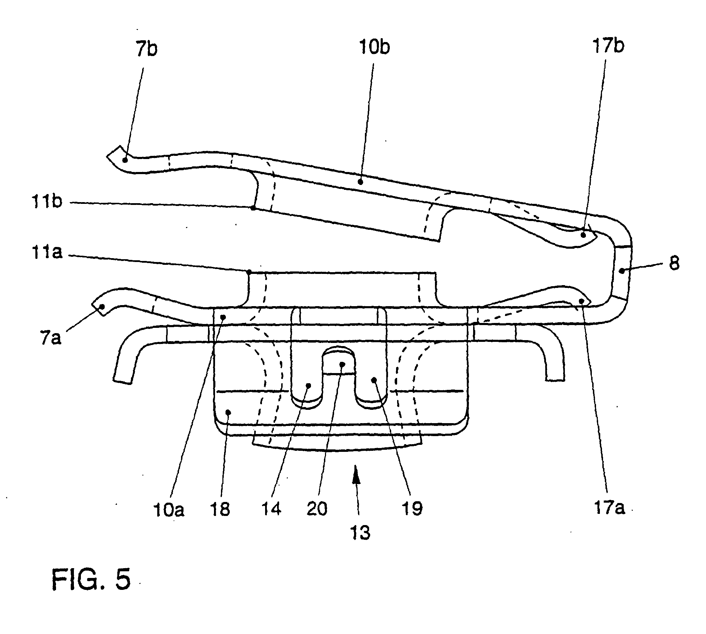

Bei der in Figur 5 gezeigten erfindungsgemäßen Verbindungseinrichtung 2 wird die Mutter durch ein mit dem unteren Klemmschenkel 10a verbundenes Gewindeteil 13 ersetzt. Das Gewindeteil 13 ist dabei durch eine Rastverbindung 14 mit dem Klemmschenkel 10a verbunden. Die Rastverbindung 14 wird dabei durch zwei seitlich am Schiebesitz heruntergezogenen Laschen 18 realisiert, in denen jeweils hufeisenförmige Fenster 19 ausgebildet sind, in denen wiederum Rastnasen 20 ausgespart sind, die zur Mitte des Schiebesitzes hin gebogen werden können und somit das axiale Spiel des Gewindeteils 13 gegenüber dem Schiebesitz festlegen. Bei der erfindungsgemäßen Ausführungsform kann die Schraube direkt von der in der Figur 5 oben gezeigten Seite in das Durchgangsloch des Klemmschenkels 10b eingeführt und in das Gewindeteil 13 eingeschraubt werden, ohne daß eine Mutter von der anderen Seite entgegenhalten werden muß. Somit wird eine einfache Befestigung von einer Seite bzw. eine z.B. durch ein Wärmeabschirmblech verdeckte Montage ermöglicht.

Bei der Befestigung wird zunächst der Spannbügel 3 des Konverters in den Bereich zwischen die Klemmschenkel 10a und 10b gelegt und anschließend eine Schraube durch die Durchgangsöffnung der Klemmschenkel mit der Mutter 6 bzw. dem Gewindeteil 13 verschraubt, bis die Anschläge 11a und 11b der beiden Klemmschenkel 10a und 10b aufeinanderliegen. Dabei wird das Wärmeabschirmblech 1 zwischen dem Schraubenkopf bzw. dem Teller 22 und dem Klemmschenkel 10b fixiert.

Durch eine breite, gerundete Ausführung der Gleitzungen 7a,b 17a,b kann eine hohe Lebensdauer sichergestellt werden, wohingegen schmale Gleitzungen dazu neigen, sich in den Spannbügel einzugraben, wodurch die Verschiebekraft erhöht wird, gegebenenfalls sogar bis zum Bruch der Anordnung.

## Patentansprüche

1. Verbindungseinrichtung (2) für ein Abgasanlagenelement mit zwei Bauteilen, wobei ein erstes Bauteil (3) und ein zweites Bauteil (1) über die Verbindungseinrichtung (2) derartig miteinander verbindbar sind, daß eine relative Verschiebbarkeit der Bauteile zueinander aufgrund unterschiedlichen Wärmeausdehnungsverhaltens möglich ist, wobei die Verbindungseinrichtung (2) Gleitzungen (7a, 7b, 17a, 17b) mit Gleitflächen (9) zur gleitfähigen Aufnahme des ersten Bauteiles (3) und zwei über einen Zwischenbereich (8) miteinander elastisch verbundene Klemmschenkel (10a, 10b) aufweist, wobei die Gleitzungen (7a, 7b, 17a, 17b) das erste Bauteil (3) mit einer vorgegebenen Federkraft in im wesentlichen horizontaler Richtung aufnehmen und mit Hilfe eines Spannmittels (5, 13) eine Fixierung des zweiten Bauteiles (1) auf der Verbindungseinrichtung (2) und eine Verspannung der Verbindungseinrichtung (2) mit dem ersten Bauteil (3) realisierbar ist, wobei das Spannmittel eine Schraube (5) und ein Gewindeteil (13) aufweist, **dadurch gekennzeichnet, daß** das Gewindeteil (13) über eine Rastverbindung (14) derart mit dem Klemmschenkel (10a) verbindbar ist, so daß die Schraube (5) bei Hindurchführung durch die in den Klemmschenkeln (10a, 10b) vorgesehenen Durchgangslöchern mit dem Gewindeteil (13) in Eingriff bringbar ist.

2. Verbindungseinrichtung nach Anspruch 1, **dadurch gekennzeichnet, daß** die Klemmschenkel (10a, 10b) Anschläge (11a, 11b) aufweisen, die bei geschlossener Verbindungseinrichtung (2) aufeinanderliegen.

3. Verbindungseinrichtung nach Anspruch 1 oder 2, **dadurch gekennzeichnet, daß** in dem zweitem Bauteil (3) ein Langloch (16) ausgebildet ist, in dem die Verbindungseinrichtung (2) verschiebbar ist.

4. Verbindungseinrichtung nach Anspruch 3, **dadurch gekennzeichnet, daß** ein Verschiebeweg durch die Differenz des Durchmessers des Langlochs in Verschieberichtung und einem radialen Durchmesser der Verbindungseinrichtung (2) im Bereich der Anschläge (11a, 11b) festgelegt ist.

5. Verbindungseinrichtung nach Anspruch 3 oder 4, **dadurch gekennzeichnet, daß** das zweite Bauteil (3) eine sich in Verschieberichtung erstreckende Nase (30) aufweist, die einen Verschiebeweg für die Gleitzungen (7a, 7b, 17a, 17b) der Verbindungseinrichtung (2) bildet, und die Zwischenbereiche (8) der Verbindungseinrichtung (2) derartig neben der Nase (30) liegen, daß ein Drehwinkelbereich der Zwischenbereiche durch die Nase (30) und den Spannbügel festgelegt ist.

6. Verbindungseinrichtung nach einem der Ansprüche 1 bis 5, **dadurch gekennzeichnet, daß** das Gewindeteil (13) mit der Verbindungseinrichtung (2) über Haltezungen verliersicher verbindbar ist.

7. Verbindungseinrichtung nach einem der Ansprüche 1 bis 6, **dadurch gekennzeichnet, daß** das Abgasanlagenelement ein Konverter bzw. ein Katalysator ist.

8. Verbindungseinrichtung nach Anspruch 7, **dadurch gekennzeichnet, daß** der Konverter bzw. der Katalysator über einen Spannbügel (3) mit dem Wärmeabschirmblech (1) verbunden ist.

9. Verbindungseinrichtung nach einem der Ansprüche 1 bis 8, **dadurch gekennzeichnet, daß** das Wärmeabschirmblech (1) als erstes Bauteil gleitfähig von den Gleitzungen aufgenommen ist.

## Claims

1. Connection element (2) for an exhaust gas system element having two components, wherein a first component (3) and a second component (1) can be mutually connected by means of a connection device (2) in such a manner that it is possible to displace the components relatively with respect to each other by reason of the different thermal expansion behaviour, wherein the connection device (2) comprises sliding tongues (7a, 7b, 17a, 17b) having sliding surfaces (9) for slidably accommodating the first component (3), and two clamping limbs (10a, 10b) which are mutually connected in an elastic manner by way of an intermediate region (8), wherein the sliding tongues (7a, 7b, 17a, 17b) accommodate the first component (3) with a specified spring force in a substantially horizontal direction and with the aid of a clamping means (5, 13) it is possible to fix the second component (1) on the connection device (2) and to clamp the connection device (2) to the first component (3), wherein the clamping means comprises a screw (5) and a threaded portion (13), **characterised in that** the threaded portion (13) can be connected to the clamping limb (10a) by way of a latch-connection (14), so that as the screw (5) is guided through the through-holes, which are provided in the clamping limbs (10a, 10b), said screw can be brought into engagement with the threaded portion (13).

2. Connection device according to claim 1, **characterised in that** the clamping limbs (10a, 10b) comprise stops (11a, 11b) which lie on each other when the connection device (2) is closed.

3. Connection device according to claim 1 or 2, **characterised in that** there is formed in the second component (3) an elongated hole (16), in which the connection device (2) can be displaced.

4. Connection device according to claim 3, **characterised in that** a displacement path is determined by the difference in diameter of the elongated hole in the displacement direction and a radial diameter of the connection device (2) in the region of the stops (11a, 11b).

5. Connection device according to claim 3 or 4, **characterised in that** the second component (3) comprises a projection (30) which extends in the displacement direction and which forms a displacement path for the sliding tongues (7a, 7b, 17a, 17b) of the connection device (2) and the intermediate regions (8) of the connection device (2) lie adjacent to the projection (30) in such a manner that an angle of rotation range of the intermediate regions is determined by the projection (30) and the clamping bracket.

6. Connection device according to any one of the claims 1 to 5, **characterised in that** the threaded portion (13) can be connected by way of holding tongues to the connection device (2) in such a manner that it cannot be lost.

7. Connection device according to any one of the claims 1 to 6, **characterised in that** the exhaust gas system element is a converter or a catalytic converter.

8. Connection device according to claim 7, **characterised in that** the converter or the catalytic converter is connected by way of a clamping bracket (3) to the metal thermal shielding plate (1).

9. Connection device according to any one of the claims 1 to 8, **characterised in that** as the first component, the metal thermal shielding plate (1) is slidably accommodated by the sliding tongues.

## Revendications

1. Dispositif d'assemblage (2) pour un élément de système de gaz d'échappement comportant deux pièces, dans lequel une première pièce (3) et une deuxième pièce (1) peuvent être reliées entre elles par l'intermédiaire du dispositif d'assemblage (2) de telle sorte qu'un déplacement relatif des pièces l'une par rapport à l'autre en raison de comportements de dilatation thermique différents est possible, dans lequel le dispositif d'assemblage (2) comporte des languettes de glissement (7a, 7b, 17a, 17b) avec des surfaces de glissement (9) pour le logement, avec possibilité de glissement, de la première pièce (3) et deux branches de serrage (10a, 10b) reliées élastiquement entre elles par l'intermédiaire d'une zone intermédiaire (8), dans lequel les languettes de glissement (7a, 7b, 17a, 17b) logent la première pièce (3) avec une force de ressort prédéterminée en direction globalement horizontale et dans lequel une fixation de la deuxième pièce (1) sur le dispositif d'assemblage (2) et un serrage du dispositif d'assemblage (2) avec la première pièce (3) sont réalisables à l'aide d'un moyen de serrage (5, 13), et dans lequel le moyen de serrage comporte une vis (5) et une pièce filetée (13), **caractérisé en ce que** la pièce filetée (13) peut être reliée à la branche de serrage (10a) par l'intermédiaire d'un assemblage à cran (14) de telle sorte que la vis (5) peut être mise en prise avec la pièce filetée (13) lorsqu'elle passe à travers les trous de passage prévus dans les branches de serrage (10a, 10b).

2. Dispositif d'assemblage selon la revendication 1, **caractérisé en ce que** les branches de serrage (10a, 10b) comportent des butées (11a, 11b) qui sont l'une sur l'autre lorsque le dispositif d'assemblage (2) est fermé.

3. Dispositif d'assemblage selon la revendication 1 ou 2, **caractérisé en ce qu'**il est conçu dans la deuxième pièce (3) un trou oblong (16) dans lequel le dispositif d'assemblage (2) peut être déplacé.

4. Dispositif d'assemblage selon la revendication 3, **caractérisé en ce qu**'une course de déplacement est fixée par la différence entre le diamètre du trou oblong dans la direction de déplacement et un diamètre radial du dispositif d'assemblage (2) dans la zone des butées (11a, 11b).

5. Dispositif d'assemblage selon la revendication 3 ou 4, **caractérisé en ce que** la deuxième pièce (3) comporte un taquet (30) qui s'étend dans la direction de déplacement et qui forme une course de déplacement pour les languettes de glissement (7a, 7b, 17a, 17b) du dispositif d'assemblage (2) et **en ce que** les zones intermédiaires (8) du dispositif d'assemblage (2) se trouvent à côté du taquet (30) de telle sorte qu'une plage d'angle de rotation des zones intermédiaires est fixée par le taquet (30) et par l'étrier de serrage.

6. Dispositif d'assemblage selon l'une quelconque des revendications 1 à 5, **caractérisé en ce que** la pièce filetée (13) peut être reliée, de manière à ne pouvoir se perdre, au dispositif d'assemblage (2) par l'intermédiaire de languettes de retenue.

7. Dispositif d'assemblage selon l'une quelconque des revendications 1 à 6, **caractérisé en ce que** l'élément de système de gaz d'échappement est un convertisseur ou un dispositif catalytique.

8. Dispositif d'assemblage selon la revendication 7, **caractérisé en ce que** le convertisseur ou le dispositif catalytique est relié à la tôle de protection contre la chaleur (1) par l'intermédiaire d'un étrier de serrage (3).

9. Dispositif d'assemblage selon l'une quelconque des revendications 1 à 8, **caractérisé en ce que** la tôle de protection contre la chaleur (1) est logée, en tant que première pièce et de manière à pouvoir glisser, par les languettes de glissement.
